# EUROPEAN PATENT SPECIFICATION

(11) **EP 3 180 973 B1**
(45) Date of publication and mention of the grant of the patent: **19.05.2021**
(21) Application number: 16201309.8
(22) Date of filing: 30.11.2016
(51) Int. Cl.: A01D 34/416

(54) **MOWING HEAD ASSEMBLY AND MOWING DEVICE PROVIDED THEREWITH**
MÄHKOPFANORDNUNG UND DAMIT AUSGESTATTETE MÄHVORRICHTUNG
ENSEMBLE TÊTE DE TONTE ET DISPOSITIF DE TONTE EN ÉTANT ÉQUIPÉ

(30) Priority: 04.12.2015 NL 2015910
(43) Date of publication of application: 21.06.2017
(73) Proprietor: RILU B.V., 4793 RW Fijnaart (NL)
(72) Inventor: Schreuders, Aart Willem, 4793 RW FIJNAART (NL); Schreuders, Johan George, 4796 RA OUDEMOLEN (NL)
(74) Representative: Haan, Raimond

(56) References cited:
- WO-A1-2012/083353
- US-A- 4 209 902
- US-A- 4 211 005
- US-A1- 2002 100 266
- US-A1- 2004 148 784

## Description

The invention relates to a mowing head assembly, comprising:
- a mowing head comprising a spool housing configured to receive therein a spool with wire for rotation relative to the spool housing; and
- a coupling configured to couple the spool and the spool housing non-rotatably relative to each other in a coupling position and to uncouple the spool relative to the spool housing in a releasing position.

The invention further relates to a mowing device comprising such a mowing head assembly.

When large areas have to be mowed, vehicles with specially configured mowing machines are usually employed. An example of a commonly used combination is a tractor provided with a flail mower. Such machines are configured to be able to mow large areas relatively quickly, but lack the option of being able to mow very precisely around objects such as trees, traffic sign posts and so on. For this purpose applicant has developed improved mowing devices, which form the subject of the non-prepublished Netherlands patent applications NL2013780 and NL2015365. The latter relates to a mowing device for mowing around objects, comprising a support frame configured to be arrangable on a vehicle and a mowing frame comprising at least one mowing head, wherein the support frame comprises a guide which can be placed at least partially around the object and with which or along which the mowing frame can be displaced in a path around the object.

Mowing heads can be provided with a wear-resistant wire such as steel wire. Mowing heads with wear-resistant (steel) wire mow very effectively and require relatively little maintenance. They however have the drawback that they can damage the object around which mowing is carried out. In order to prevent damage to the object, such as a tree, it is possible to use mowing heads which are provided with a device for accommodating a consumable quantity of wearing wire. Such mowing heads which are provided with wearing wire are also referred to as buffing heads.

Because the wearing wire wears during use and the wire thus becomes slightly shorter every time, it will be regularly necessary to extend the wire to an effective length again. A coupling provided in the spool housing of the mowing head and comprising a spool biased by a spring is provided for this purpose in brush cutters. By slamming the brush cutter into the ground with force the biasing force of the spring is briefly overcome, whereby the spool is lifted and can move over a protrusion. As a result the spool can rotate over a short stroke until it engages against a subsequent protrusion. During the performed rotation stroke a new piece of wire will be released from the spool, which extends the wire length to some extent.

A conventional brush cutter comprises therefore a mowing head assembly, comprising:
- a mowing head comprising a spool housing configured to receive therein a spool with wire for rotation relative to the spool housing; and
- a coupling configured to couple the spool and the spool housing non-rotatably relative to each other in a coupling position and to uncouple the spool relative to the spool housing in a releasing position.

A drawback of such a releasing device known from the prior art as applied in brush cutters is that it has to be slammed into the ground repeatedly in violent manner in order to actuate the releasing device. Using a brush cutter is already very labour-intensive because they are heavy machines, which are generally carried by a person using a harness. Regularly slamming this heavy machine into the ground in addition thereto is an extra physical exertion.

As already stated, vehicles with specially configured mowing machines, as described in the non-prepublished Netherlands patent applications NL2013780 and NL2015365 of Applicant, are usually employed for mowing large areas. Although it is possible to envisage a driver of a vehicle repeatedly slamming the mowing device into the ground with force, it goes without saying that this repeated impact may shorten the lifespan of the mowing machine. It can additionally damage the ground, particularly when this ground is slightly soft due to humid conditions.

The present invention has for its object to provide a mowing head assembly wherein the stated drawbacks do not occur, or at least do so to lesser extent. It would be particularly advantageous if a mowing head assembly can be controlled with limited physical exertion. Still more preferably, the control can take place from some distance, for instance from the cab of a vehicle.

US-A1-2002/100266, which forms the closest prior art, relates to a mobile driven mowing unit provided with an actuator which can be arranged on a vehicle and is configured to release successive pieces of wire from a spool in controlled manner, wherein the released pieces of wire have a predetermined length. A solenoid, which temporarily overcomes a compression force of a compression spring, is actuated from the driver's cab. A drawback of the mowing head assembly known from US-A1-2002/100266 is that the coupling and the solenoid acting on the coupling result in a spool housing of the mowing head with a relatively large size. The coupling is moreover located at a vulnerable position close to the mowing head.

US-A-4,209,902, US-A-4,211,005 and US-A1-2004/148784 are recognized as further prior art.

Said object is achieved according to the invention with a mowing head assembly, comprising:
- a mowing head comprising a spool housing configured to receive therein a spool with wire for rotation relative to the spool housing;
- a coupling configured to couple the spool and the spool housing non-rotatably relative to each other in a coupling position and to uncouple the spool relative to the spool housing in a releasing position;
- wherein a selectively actuable control is provided which is configured to carry the coupling from the coupling position to the releasing position; and
- wherein the coupling is arranged outside the spool housing of the mowing head.

The coupling can be carried into the releasing position temporarily by applying a selectively actuable control, whereby the spool housing of the mowing head and the spool with wire are temporarily uncoupled. As a result a relative rotation between the spool housing and the spool can take place, whereby the wire will unwind from the spool under the influence of a centrifugal force. The wire can hereby extend to an effective length.

A further advantage of applying a selectively actuable control is that the mowing head assembly can be controlled from a distance, for instance from the cab of a vehicle.

According to a preferred embodiment of the mowing head assembly, it comprises a hollow drive shaft connected non-rotatably to the spool housing, and wherein the selectively actuable control comprises an elongate member extending through the hollow drive shaft. The hollow drive shaft enables the spool situated in the spool housing of the mowing head to be uncoupled relative to the spool housing while the mowing head is being driven. Although the elongate member can be a flexible member such as a cord or chain, the elongate member is preferably a substantially rigid member such as a shaft. A shaft is more robust and can be under strain of both tension and pressure.

According to a further preferred embodiment of the mowing head assembly, the mowing head defines an axial direction of operation and a radial direction of operation, wherein the axial direction of operation extends downward during use, toward vegetation to be mowed with the wire, and wherein the radial direction of operation extends radially from the axial direction of operation, and wherein the coupling is situated on a side lying, as seen from the spool, opposite to the axial direction of operation.

During use wherein the axial direction of operation is directed substantially downward toward vegetation, such as grass, growing on the ground, the coupling will thus be situated at a higher level than the spool.

Because the coupling is situated on a side lying, as seen from the spool, opposite to the axial direction of operation, space is created for a selectively actuable control which is configured to move the coupling from the coupling position to the releasing position.

In the case of a brush cutter the coupling is situated on the underside of the spool housing. A compression spring arranged between the spool and the upper side of the spool housing presses the spool downward against the coupling. The coupling of the brush cutter is temporarily released by slamming the coupling into the ground with force. There is however insufficient space between the spool and the bottom to arrange a selectively actuable control according to the invention.

According to the invention, the coupling is arranged outside the spool housing of the mowing head. The spool housing of the mowing head can hereby maintain a limited size, and the coupling can if desired be arranged some distance from the mowing head, and thereby in better protected manner.

According to yet another preferred embodiment, the mowing head assembly further comprises a coupling shaft which is connected to the coupling and extends through the wall of the spool housing for rotation relative to the spool housing, and which can be coupled non-rotatably to the spool in the spool housing. Owing to the coupling shaft, the coupling can be placed some distance from the spool housing, which provides structural advantages for arranging a drive, as will be elucidated hereinbelow.

According to yet another preferred embodiment, the coupling comprises:
- a first coupling part connected non-rotatably to the spool;
- a second coupling part connected non-rotatably to the spool housing;
- wherein the first coupling part and the second coupling part are arranged coaxially relative to each other; and
- wherein the first coupling part and the second coupling part each comprise one or more than one protrusion which are in engagement with each other in the coupling position and which are at least temporarily out of engagement with each other in the releasing position.

The first coupling part and the second coupling part are arranged coaxially relative to each other, wherein their shared axis coincides with the longitudinal axis of the coupling shaft. The coupling shaft moreover extends in the axial direction of operation of the mowing head assembly. Because the first coupling part is connected non-rotatably to the spool and the second coupling part is connected non-rotatably to the spool housing, a relative rotation between the spool and the spool housing can be regulated with the coupling.

According to yet another preferred embodiment, at least the first coupling part or the second coupling part comprises a labyrinthine groove forming the one or more than one protrusion, and wherein the one or more than one protrusion of the other coupling part can be guided through this labyrinthine groove. The labyrinthine groove defines a stroke length wherein the first coupling part and the second coupling part are displaceable relative to each other. Because the first coupling part is connected non-rotatably to the spool and the second coupling part is connected non-rotatably to the spool housing, the stroke length defined by the labyrinthine groove is related to a relative rotation between the spool and the spool housing.

According to yet another preferred embodiment, the selectively actuable control comprises an actuator configured to move the coupling between the coupling position and the releasing position. This actuator can for instance be a solenoid which is electronically actuated from a distance, for instance from a driver's cab of a mowing device.

According to yet another preferred embodiment, the actuator is configured to displace the coupling parts arranged coaxially relative to each other in an axial direction relative to each other, wherein the protrusions are brought out of engagement in the releasing position.

According to yet another preferred embodiment, one coupling part is connected to a lever which is pivotable about a pivot axis and on which the actuator engages. The force exerted by the actuator can on the one hand be increased by the moment arm of the lever. The lever on the other hand provides the option of positioning the control substantially adjacently of instead of in line with the coupling, which enables a more compact construction of the mowing head assembly.

According to yet another preferred embodiment, the pivotable lever is biased by a spring acting counter to the actuator. When the actuation of the actuator is removed, the spring will displace the lever back again so that the coupling returns to its coupling position. The skilled person will appreciate that a kinematic reversal is possible here. The actuator can on the one hand be a pushing actuator which pushes the lever in a first direction or a spring which moves the lever in a second direction, which is opposite to the first direction. If the spring is arranged on the same side of the lever as the pushing actuator, the spring will be a tension spring. If the spring is arranged on the other side of the lever to the pushing actuator, the spring will be a compression spring. The actuator can on the other hand be a pulling actuator, in which case a spring on the same side of the lever is a compression spring and in which case a spring on the other side of the lever is a tension spring.

According to yet another preferred embodiment, the first coupling part and the second coupling part together define at least four coupling positions over the circumference thereof. Because the first coupling part is connected non-rotatably to the spool and the second coupling part is connected non-rotatably to the spool housing, the distances between the coupling positions are related to the relative rotation between the spool and the spool housing and therefore related to the amount of wire which is released between two coupling positions. It is also possible to envisage a larger number of coupling positions being defined, such as more than six, more than eight, more than ten, or even twelve or more coupling positions. In the case that there are twelve coupling positions, they are distributed proportionately over the circumference at a mutual angle of in each case about 30°.

According to yet another and alternative preferred embodiment, the mowing head assembly further comprises a spring arranged in the spool housing and configured to force the coupling into the coupling position, and wherein the selectively actuable control comprises a coupling shaft which extends through the hollow drive shaft and which is configured to uncouple the spool relative to the spool housing when the selectively actuable control is actuated.

According to yet another preferred embodiment, the spring is a compression spring arranged between the spool and the cover of the spool housing, and wherein the coupling shaft is provided at or close to an outer end with an end stop which can engage on the compression spring. Such a compression spring is per se known from mowing heads for brush cutters. Instead of slamming the mowing head into the ground with force in order to temporarily overcome the bias exerted on the spool by the spring, as is usual in brush cutters, the coupling according to the invention can however be controlled with a selectively actuable control. The coupling shaft extending through the hollow drive shaft ensures that the selectively actuable control can counteract the compression spring, whereby the coupling is temporarily carried into a releasing position.

According to yet another preferred embodiment, the selectively actuable control comprises an actuator configured to move the coupling between the coupling position and the releasing position.

According to yet another preferred embodiment, a drive for rotatable driving of at least the mowing head with the spool housing is provided between the coupling and spool housing. The drive, comprising for instance a belt pulley or a toothed wheel, serves for rotatable driving of the mowing head, optionally together with the spool. Arranging the drive between spool housing and the coupling enables the mowing head device to be arranged in a mowing frame of a mowing device in structurally simple manner and with limited installation space.

According to yet another preferred embodiment, a hollow drive shaft is provided between the drive and the spool housing, and wherein the coupling shaft extends through the hollow drive shaft. The application of a hollow drive shaft enables the coupling shaft to extend therethrough, so that the drive can be arranged between the mowing head and the coupling in structurally elegant manner.

According to yet another preferred embodiment, the hollow drive shaft is received rotatably in a bearing bush. The bearing bush enables the mowing device to be mounted rotatably on a mowing frame of a mowing device.

The invention further relates to a mowing device for mowing around an object, comprising:
- a support frame configured to be arrangable on a vehicle; and
- a mowing frame arranged on the support frame and comprising at least one mowing head assembly according to any of the foregoing claims.

According to a preferred embodiment of the mowing device, the coupling is situated, as seen from the spool, on the same side of the spool as an attachment whereby the mowing head assembly is mounted on the support frame.

According to yet another preferred embodiment, an attachment whereby the mowing head assembly is mounted on the support frame is arranged between the spool housing and the coupling. The attachment can for instance comprise a bearing bush.

The invention further relates to a brush cutter comprising a mowing head assembly according to the invention.

Preferred embodiments of the present invention are further elucidated in the following description with reference to the drawing, in which:
Figure 1 shows a perspective view of a mowing head assembly according to the invention;
Figure 2 shows a partially transparent and partially perspective view of the mowing head assembly according to figure 1;
Figure 3 shows a spaced-apart perspective view of the mowing head assembly according to figures 1 and 2;
Figure 4 shows a cross-sectional view of the mowing head assembly according to figures 1-3 in a first position;
Figure 5 shows a cross-sectional view of the mowing head assembly according to figures 1-3 in a second position;
Figures 6-10 show perspective views of successive steps during uncoupling and recoupling of the coupling;
Figure 11 shows a side view of the coupling with a schematic view of the rotation stroke covered in figures 6-10;
Figure 12 shows a top view of the coupling with a schematic view of the rotation stroke covered in figures 6-10;
Figures 13 and 14 show a top view of a starting position and end position of a spool according to the rotation stroke covered in figures 6-10; and
Figures 15 and 16 show detailed cross-sectional views of a further preferred embodiment in respectively a coupling position and a releasing position.

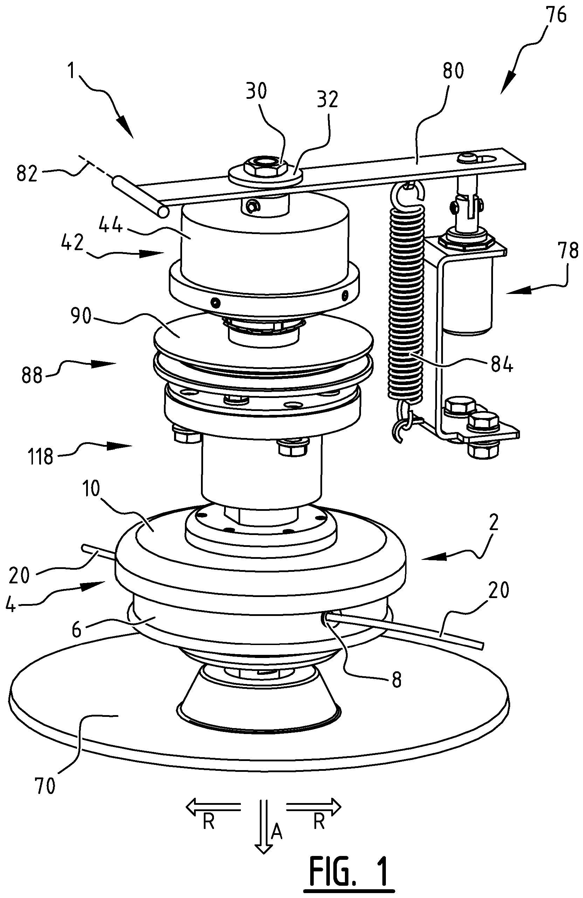

The perspective view of figure 1 shows a mowing head assembly 1 comprising a mowing head 2. Mowing head 2 has a spool housing 4 configured to receive therein a spool 18 with wire 20 for rotation relative to spool housing 4. Provided on the underside of mowing head assembly 1 is a spacer 70 which holds mowing head 2 a minimal distance above the ground during mowing operations, wherein this distance is related to the mowing height.

Spool housing 4 comprises a container 6 in which wire passage openings 8 are provided, through which wire 20 of spool 18 can extend to a position outside mowing head 2. Container 6 is closed on the upper side by a cover 10.

Arranged above cover 10 is a bearing bush 118 which serves to mount mowing head assembly 1 rotatably on a frame 126 of for instance a mowing assembly, as will be elucidated hereinbelow. It is noted that 'above' refers to the situation shown in the figure, which corresponds to the orientation of mowing head assembly 1 during use thereof.

Situated above bearing bush 118 is a drive 88 which in the shown embodiment has a belt pulley 90.

A coupling 42 and a control 76 of coupling 42 are shown further upward. The selectively actuable control 76 comprises an actuator 78 in the form of a solenoid. Actuator 78 can displace a lever 80 around a pivot shaft 82, wherein the lever can control coupling 42 between a coupling position and an uncoupling position via an attachment to coupling 42. Lever 80 has a drilled hole (not shown) through which a coupling shaft 26 extends. Coupling shaft 26 has on its outer end a nut 30 and a ring 32, wherein ring 32 lies against lever 80.

Actuator 78 is counteracted by a spring 84 so that when the selectively applicable actuation of actuator 78 drops out, spring 84 moves lever 80 back, whereby coupling 42 is returned to a coupling position. This process will be further elucidated hereinbelow.

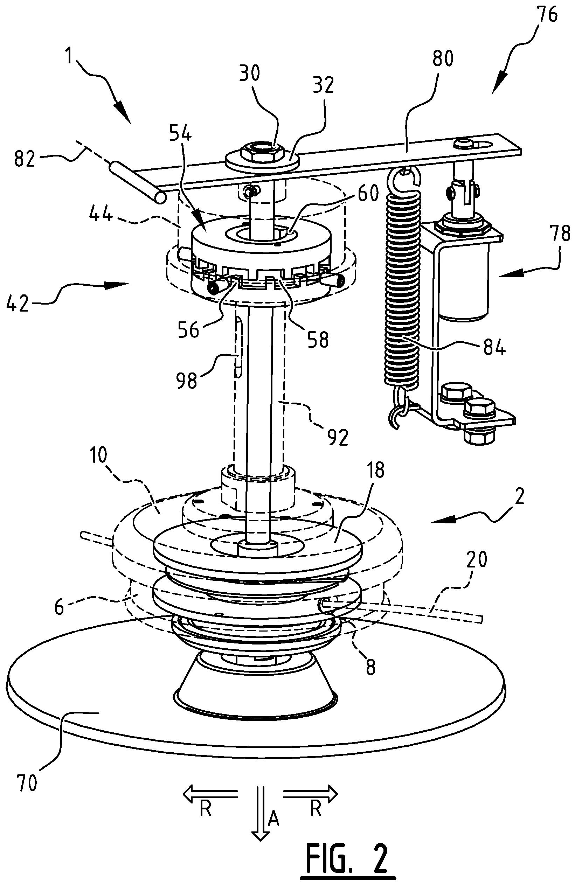

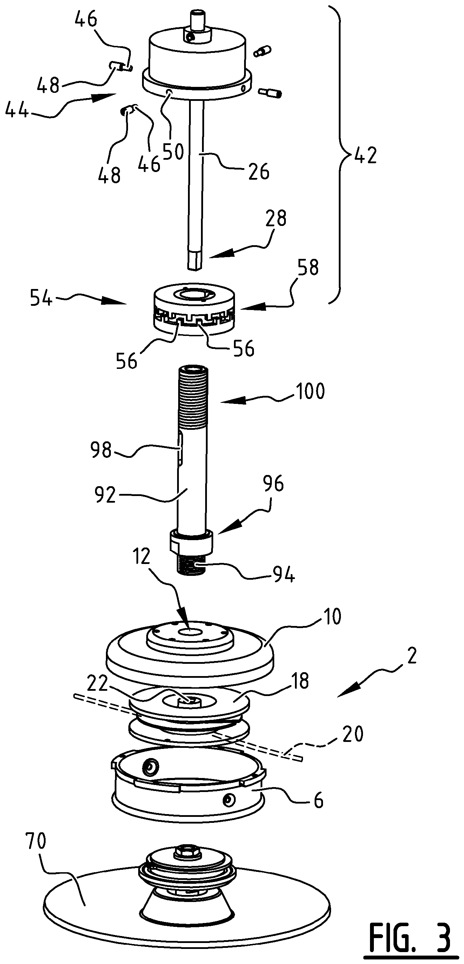

Coupling 42 is configured to couple spool 18 and spool housing 4 non-rotatably relative to each other in a coupling position and to uncouple spool 18 relative to spool housing 4 in a releasing position. The selectively actuable control 76 is configured to move coupling 42 from the coupling position to the releasing position. Because mowing head 2, a hollow drive shaft 92 and a first coupling part 44 are shown in broken lines in figure 2, second coupling part 54 of coupling 42 is visible. Figure 2 shows an assembled state and figure 3 shows the components in a spaced-apart view.

The above discussed mowing head 2 is spaced apart in figure 3, and shows a spool 18 with wire 20 between cover 10 and container 6. Cover 10 is provided on the upper side with an opening 12 with internal screw thread 14. Hollow drive shaft 92 is provided on an outer end with an external screw thread 94 which corresponds to the internal screw thread 14 of opening 12. Hollow drive shaft 92 can in this way be connected in non-rotating and drivable manner to cover 10 of mowing head 2. Hollow drive shaft 92 further has a keyway 98 in which a key (not shown) can be placed. Hollow drive shaft 92 can be coupled non-rotatably to belt pulley 90 using the key. Hollow drive shaft 92 is likewise provided on its outer end remote from external screw thread 94 with an external screw thread 100. Hollow drive shaft 92 further comprises a shoulder 96 on which bearing bush 118 can support.

Coupling 42 is likewise shown spaced apart and comprises a first coupling part 44 and a second coupling part 54.

First coupling part 44 is connected non-rotatably to a rotation-asymmetrical shaft opening 22 of spool 18 using a coupling shaft 26. Coupling shaft 26 extends through hollow drive shaft 92 and opening 12 in cover 10 of spool housing 4, and into spool housing 4. Coupling shaft 26 is provided with a rotation-asymmetrical (non-round) outer end which corresponds to the form of the rotation-asymmetrical shaft opening 22 of spool 18, so that a non-rotating coupling results between coupling shaft 26 and spool 18.

First coupling part 44 is connected non-rotatably to coupling shaft 26 and is thereby likewise connected non-rotatably to spool 18. First coupling part 54 comprises a number of openings 50 distributed over the circumference and through which a pin 48 can be inserted to a position inside first coupling part 44. The part of pin 48 extending inside first coupling part 44 there forms a protrusion 46 whereby first coupling part 44 can be coupled to second coupling part 54.

Second coupling part 54 comprises a keyway 60 and can thereby be connected non-rotatably to hollow drive shaft 92, whereby second coupling part 54 is likewise connected non-rotatably to spool housing 4 of mowing head 2.

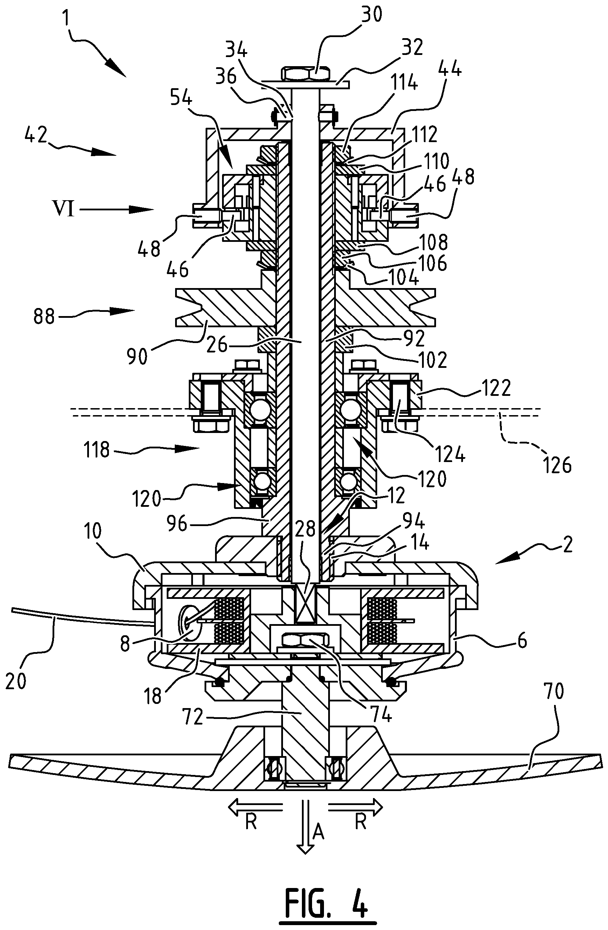

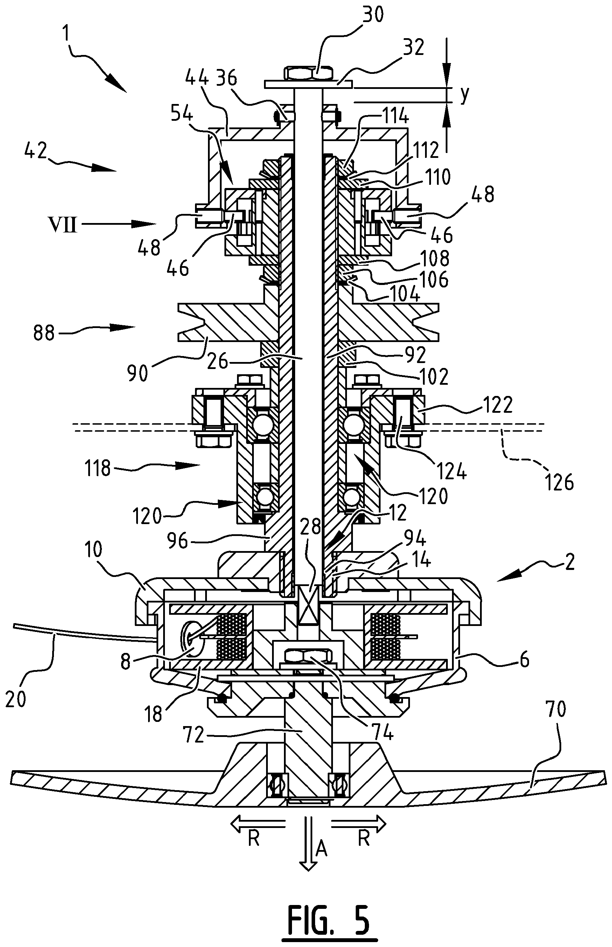

Mowing head assembly 1 according to the invention is shown in more detail in the cross-sectional views of figures 4 and 5. Figure 4 shows a coupled state of coupling 42 and figure 5 shows an uncoupled state of coupling 42.

Mowing head assembly 1 has a wire 20, with which it can perform the mowing operations, close to spool 8. The radial direction in which wire 20 extends around mowing head 2 defines a radial direction of operation R of mowing head assembly 1. Because mowing head 2 serves during use to mow vegetation, such as grass, growing on the ground, mowing head assembly 1 will be in the orientation shown in figures 4 and 5 during use, wherein a downward directed axial direction of operation A is defined.

Spacer 70 can come into contact with the ground and holds mowing head 2 a minimal distance above the ground, which ensures a minimal mowing height.

It is noted that coupling 42 is situated on a side of spool 18 opposite to the axial direction of operation A, which creates space for the selectively actuable control 76 which is configured to carry coupling 42 from the coupling position to the releasing position. In the orientation of the mowing head assembly shown in the figures, which corresponds to an orientation during use, the side of spool 18 lying opposite to the axial direction of operation A is situated on the upper side of spool 18.

In the shown embodiment coupling 42 is arranged outside spool housing 4 of mowing head 2 and coupling 42 is situated some distance from mowing head 2. Coupling shaft 26 connects first coupling part 44 of coupling 42 to spool 18 in spool housing 4 of mowing head 2. Because coupling shaft 26 provides some distance between coupling 42 and spool housing 4, it is possible to provide therebetween a bearing bush 118 whereby mowing head assembly 1 can be mounted on a frame 126 of for instance a mowing frame using bolts 124. A drive 88 can further be provided between coupling 42 and mowing head 2.

The detailed view of figures 4 and 5 further shows how spacer 70 is mounted with a bushing 72 and nut 74 on the underside of mowing head 2.

Bearing bush 118, which is provided with ball bearings 120, rests on the shoulder 96 of hollow drive shaft 92. Connection to frame 126 of the mowing frame takes place via bolts 124 arranged in a flange 122.

A washer 102 is arranged between belt pulley 90 of drive 88 and bearing bush 118.

A locking ring 104, a nut 106 and a ring 108 are provided on the upper side of belt pulley 90. The second coupling part 54, to be further elucidated hereinbelow, is then arranged around hollow drive shaft 92, and a ring 110, locking ring 112 and nut 114 are then arranged, wherein nut 114 engages on external screw thread 100 of hollow drive shaft 92.

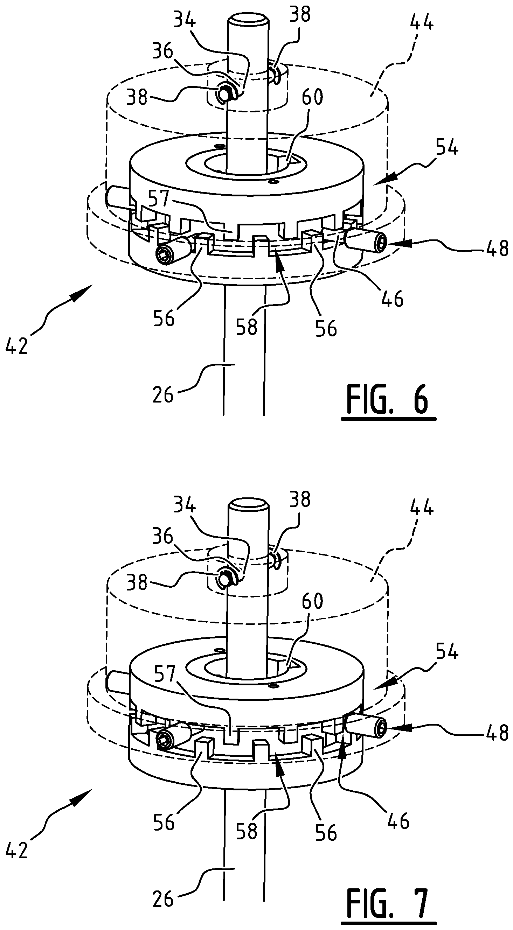

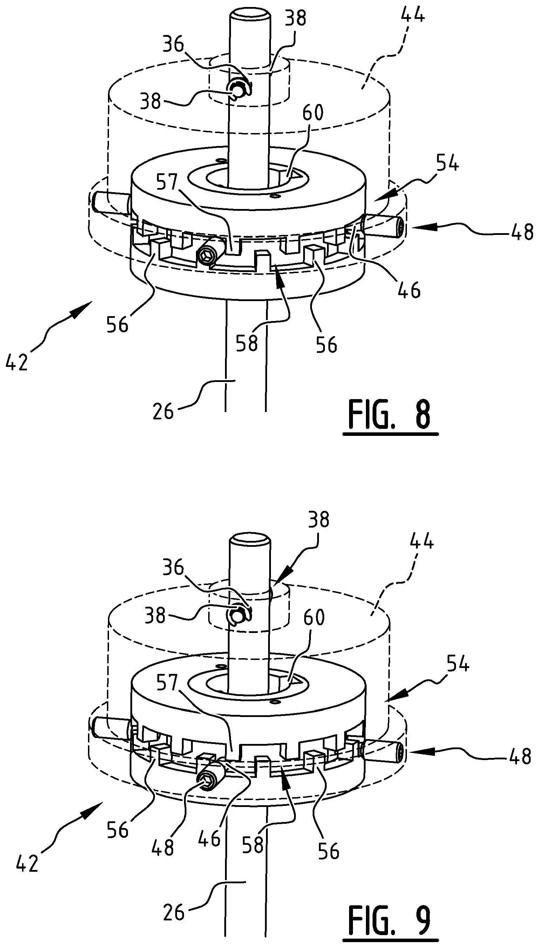

The coupled position shown in figure 4 corresponds to the perspective detail view according to figure 6, and the uncoupled position shown in figure 5 corresponds to the state of for instance figure 8. First coupling part 44 of coupling 42 is here displaced in height direction over a distance "y" by the selectively actuable control 76.

The operation of the coupling will now be further elucidated with reference to figures 6-10. First coupling part 44 is shown in broken lines in all figures, which makes the relative position and the relative orientation of second coupling part 54 relative to first coupling part 44 clearly visible.

It is noted that first coupling part 44 is connected non-rotatably to coupling shaft 26 using a locking pin 36. Coupling shaft 26 is provided with a recess 34 through which locking pin 36 extends. The locking pin is secured with retaining rings 38.

Referring to figure 3, first coupling part 44 is provided with pins 48 inserted through openings 50 and forming protrusions 46 inside first coupling part 44. Pins 48 and protrusions 46 of first coupling part 44 are shown in full lines for the sake of clarity. Protrusions 46 thus form part of first coupling part 44 and fall into a labyrinthine groove 58 arranged on the outer periphery of second coupling part 54. Labyrinthine groove 58 has a number of protrusions 56 against which protrusions 46 of first coupling part 44 can engage. This engagement between protrusions 46 of the first coupling part and protrusions 56 of labyrinthine groove 58 of second coupling part 54 takes place when coupling 42 is in a coupling position. Such a coupling position is for instance shown in figure 6.

When coupling 42 is controlled by means of selectively actuable control 76, actuator 78 will displace lever 80 upward. Lever 80 is connected to coupling shaft 26 via ring 32 and nut 30. When lever 80 moves upward, coupling shaft 26 will also displace in upward direction and thereby co-displace first coupling part 44 in upward direction. Protrusions 46 will as a result be pulled out of engagement with protrusions 56 in the lower part of labyrinthine groove 58 (figure 7), whereby a relative rotation can take place between first coupling part 44 and second coupling part 54.

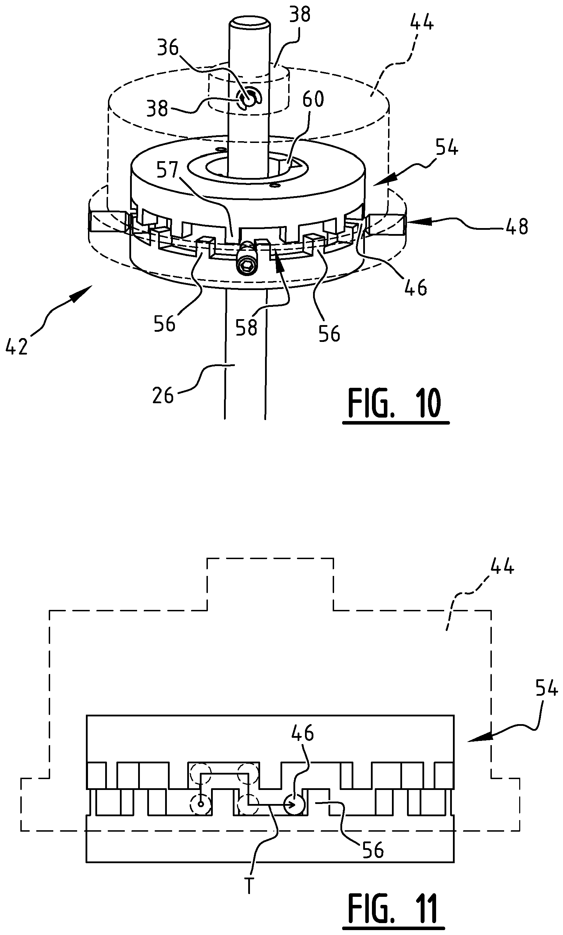

Protrusions 46 of the first coupling part will then come into contact with a protrusion 57 on the upper side of the labyrinthine groove (figure 8). Because actuator 78 is only briefly actuated and spring 84 pulls lever 80 back downward after the actuation of actuator 78 drops out, protrusion 46 of first coupling part 44 will be brought out of engagement with protrusion 57 on the upper side of labyrinthine groove 58 of second coupling part 54 (figure 9). Because first coupling part 44 and second coupling part 54 can now perform yet another relative rotation relative to each other, protrusion 46 will displace to the position shown in figure 10. Figure 10 shows a new coupling position, wherein protrusion 46 of first coupling part 44 lies against the next protrusion 56 on the underside of the labyrinthine groove 58 of second coupling part 54.

The distance travelled by a protrusion 46 from the position shown in figure 6 to the position shown in figure 10 is related to the relative rotation performed by first coupling part 44 and second coupling part 54 relative to each other when coupling 42 is temporarily uncoupled by selectively actuable control 76. The trajectory covered by a protrusion 46 in figures 6-10 is shown schematically in the side view of figure 11.

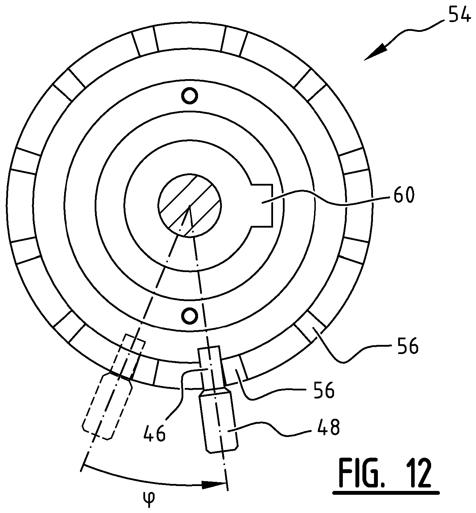

The top view of figure 12 shows lower protrusions 56 of labyrinthine groove 58 and shows the angular displacement ϕ undergone by a protrusion 46 along the trajectory of figure 11.

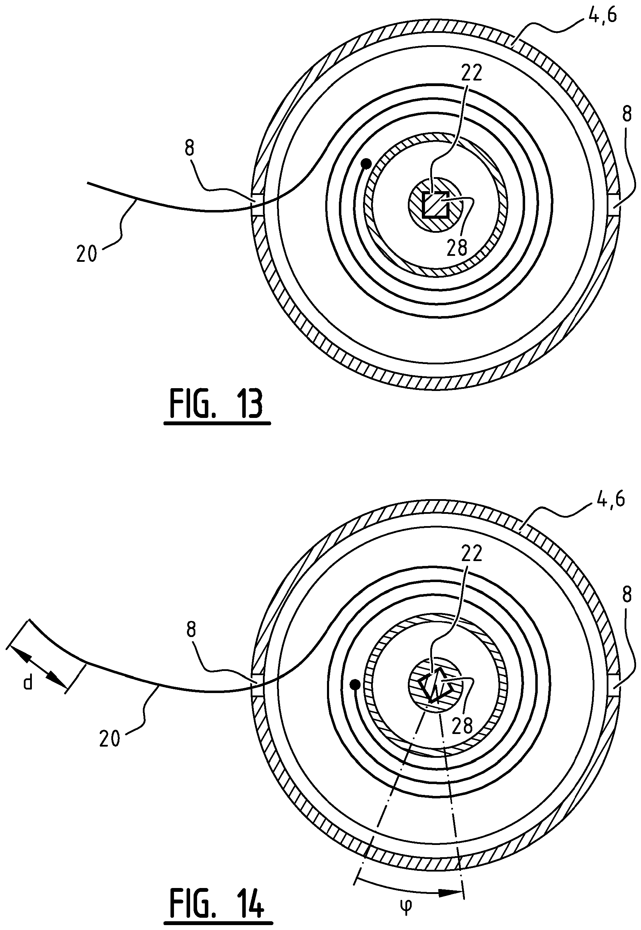

Figures 13 and 14 correspond to the respective states in figures 6 and 10 and show how wire 2 increases by a wire length d when spool 18 performs an angular displacement ϕ relative to spool housing 4.

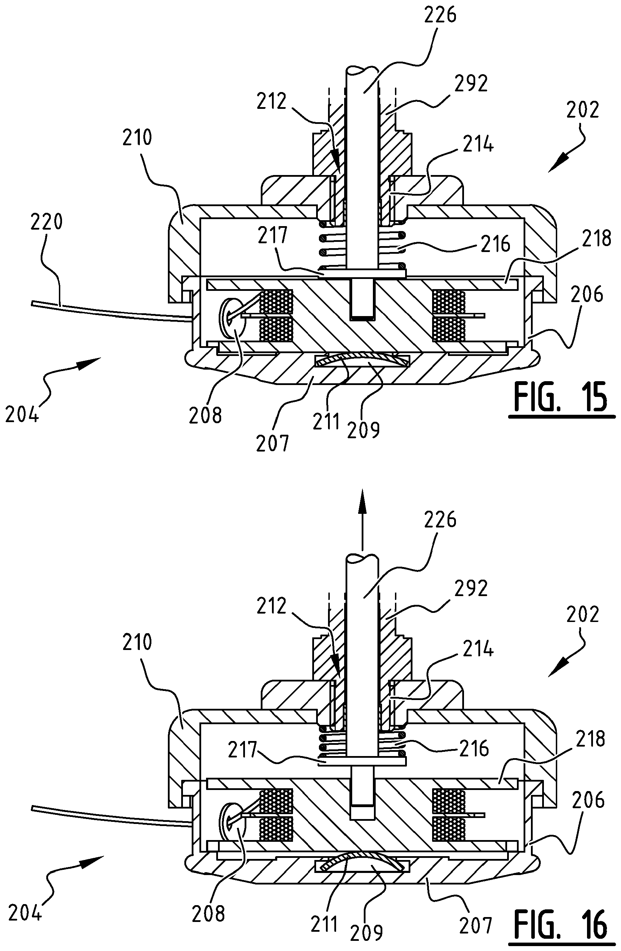

Figures 15 and 16 show detailed cross-sectional views of a further (alternative) preferred embodiment of a mowing head assembly according to the invention as could for instance be applied in a brush cutter. The mowing head assembly comprises a mowing head 202 with a spool housing 204 which is configured to receive therein a spool 218 with wire 220 for rotation relative to spool housing 204. Wire 220 can extend through wire passage openings 208 arranged in container 206 and to a position outside spool housing 204.

This embodiment greatly resembles a conventional mowing head of a brush cutter. Provided between cover 201 of spool housing 204 and spool 218 is a compression spring 216 which presses spool 218 toward the bottom 207 of the container 206 of spool housing 204. Spool 218 presses against protrusions (not shown) arranged on bottom 207, as are known in prior art brush cutters. The protrusions form as it were the coupling which is configured to couple spool 218 and spool housing 204 non-rotatably relative to each other in a coupling position and to uncouple spool 218 relative to spool housing 204 in a releasing position.

The invention differs from a prior art brush cutter in that a selectively actuable control 76 is provided which is configured to carry the coupling from the coupling position to the releasing position. Applying a selectively actuable control enables the coupling to be carried into the releasing position temporarily, whereby spool housing 204 of mowing head 202 and spool 218 with wire 220 are temporarily uncoupled. A relative rotation between spool housing 204 and spool 218 can take place as a result hereof, whereby wire 220 will unwind from spool 218 under the influence of a centrifugal force. The wire can hereby extend to an effective length.

The biasing force of spring 216 can be overcome briefly with the selectively actuable control 76, whereby spool 218 is lifted and can move over a protrusion (not shown). As a result spool 218 can rotate over a short stroke until it engages against a subsequent protrusion. During the performed rotation stroke a new piece of wire will be released from spool 218, which extends the wire length slightly.

Cover 210 of spool housing 204 comprises an opening 212 which is provided with an internal screw thread 214. A hollow drive shaft 292 is provided at the outer end with an external screw thread with which hollow drive shaft 292 can engage in non-rotating and drivable manner on the internal screw thread 214 of spool housing 204.

Because hollow drive shaft 292 is hollow, coupling shaft 226 can extend through hollow drive shaft 292 and into spool housing 204.

Coupling shaft 226 is provided at its outer end lying inside spool housing 204 with an end stop 217 which engages on compression spring 216. When coupling shaft 226 is displaced in upward direction with the selectively actuable control, which can be embodied similarly to the control 76 shown in figures 1 and 2, the outer end of coupling shaft 226 will displace in the direction of cover 210 and compress compression spring 216 (figure 16).

Because the selectively actuable control temporarily removes the compression force exerted on spool 218 by compression spring 216, spool 218 can move over a protrusion (not shown). As a result spool 218 can rotate over a short stroke until it engages against a subsequent protrusion. During the performed rotation stroke a new piece of wire will be released from spool 218, which extends the wire length slightly.

In order to enhance the movement over the protrusion (not shown) a spring chamber 209 in which an auxiliary compression spring 211 is arranged is recessed into bottom 207. Auxiliary compression spring 211 is less strong than compression spring 216, but is strong enough to be able to lift spool 218 when compression spring 216 does not press against spool 218.

Although it shows a preferred embodiment of the invention, the above described embodiment is intended solely for the purpose of illustrating the present invention and not to limit the scope of the invention in any way. The skilled person will thus appreciate that kinematic reversals are possible which fall within the inventive concept. It is possible to envisage that the coupling part connected to spool 18 is embodied as a second coupling part 54 according to the description, and that the coupling part connected to spool housing 4 is embodied as a first coupling part 44 according to the description. A labyrinthine groove can also be provided in first coupling part 44, in which case second coupling part 54 is provided with protrusions which can engage on this groove.

When measures in the claims are followed by reference numerals, such reference numerals serve only to contribute toward understanding of the claims, but are in no way limitative of the scope of protection. The rights described are defined by the following claims.

## Claims

1. Mowing head assembly, comprising:
- a mowing head (2) comprising a spool housing (4) configured to receive therein a spool (18) with wire (20) for rotation relative to the spool housing;
- a coupling (42) configured to couple the spool (18) and the spool housing (4) non-rotatably relative to each other in a coupling position and to uncouple the spool (18) relative to the spool housing (4) in a releasing position; and
- wherein a selectively actuable control (76) is provided which is configured to carry the coupling (42) from the coupling position to the releasing position.;
**characterized in that** the coupling (42) is arranged outside the spool housing (4) of the mowing head (2).

2. Mowing head assembly according to claim 1, comprising:
- a hollow drive shaft connected non-rotatably to the spool housing; and
- wherein the selectively actuable control comprises an elongate member extending through the hollow drive shaft.

3. Mowing head assembly according to claim 1 or 2, further comprising a coupling shaft (26) which is connected to the coupling (42) and extends through the wall (10) of the spool housing for rotation relative to the spool housing (4), and which can be coupled non-rotatably to the spool (18) in the spool housing (4).

4. Mowing head assembly according to claim 2 or 3, further comprising:
- a spring arranged in the spool housing and configured to force the coupling into the coupling position; and
- wherein the selectively actuable control comprises a coupling shaft which extends through the hollow drive shaft and which is configured to uncouple the spool relative to the spool housing when the selectively actuable control is actuated.

5. Mowing head assembly according to claim 4, wherein the spring is a compression spring arranged between the spool and the cover of the spool housing, and wherein the coupling shaft is provided at or close to an outer end with an end stop which can engage on the compression spring.

6. Mowing head assembly according to any of the foregoing claims, wherein a drive (88) for rotatable driving of at least the mowing head (2) with the spool housing (4) is provided between the coupling (42) and spool housing (4).

7. Mowing head assembly according to claims 3 and 6, wherein the hollow drive shaft is provided between the drive (88) and the spool housing (4), and wherein the coupling shaft (26) extends through the hollow drive shaft (92).

8. Mowing head assembly according to any of the claims 2-7, wherein the hollow drive shaft (92) is received rotatably in a bearing bush (118).

9. Mowing head assembly according to any of the foregoing claims, wherein the coupling (42) comprises:
- a first coupling part connected non-rotatably to the spool;
- a second coupling part connected non-rotatably to the spool housing;
- wherein the first coupling part and the second coupling part are arranged coaxially relative to each other; and
- wherein the first coupling part and the second coupling part each comprise one or more than one protrusion which are in engagement with each other in the coupling position and which are at least temporarily out of engagement with each other in the releasing position.

10. Mowing head assembly according to claim 9, wherein at least the first coupling part or the second coupling part comprises a labyrinthine groove (58) forming the one or more than one protrusion, and wherein the one or more than one protrusion of the other coupling part can be guided through this labyrinthine groove.

11. Mowing head assembly according to claim 9 or 10, wherein the selectively actuable control (76) comprises an actuator (78) configured to move the coupling between the coupling position and the releasing position; and
- wherein the actuator (78) is preferably configured to displace the first and second coupling parts arranged coaxially relative to each other in an axial direction relative to each other, wherein the protrusions are brought out of engagement in the releasing position.

12. Mowing device for mowing around an object, comprising:
- a support frame configured to be arrangable on a vehicle; and
- a mowing frame arranged on the support frame and comprising at least one mowing head assembly according to any of the foregoing claims.

13. Mowing device according to claim 12, wherein an attachment (118) whereby the mowing head assembly (1, 201) is mounted on the support frame (126) is arranged between the spool housing (4, 204) and the coupling (42).

14. Brush cutter comprising a mowing head assembly according to any of the claims 1, 2, 4-7.

## Patentansprüche

1. Mähkopfbaugruppe, aufweisend:
- einen Mähkopf (2) mit einem Spulengehäuse (4), welches so ausgebildet ist, dass es darin eine Spule (18) mit Draht (20) zur Drehung relativ zum Spulengehäuse aufnimmt;
- eine Kupplung (42), die so ausgebildet ist, dass sie die Spule (18) und das Spulengehäuse (4) relativ zueinander in einer Kupplungsposition drehfest kuppelt und die Spule (18) relativ zum Spulengehäuse (4) in einer Freigabeposition entkuppelt; und
- wobei eine selektiv betätigbare Steuerung (76) vorgesehen ist, die so ausgebildet ist, dass sie die Kupplung (42) aus der Kupplungsposition in die Freigabeposition bringt;
**dadurch gekennzeichnet, dass**
die Kupplung (42) außerhalb des Spulengehäuses (4) des Mähkopfes (2) angeordnet ist.

2. Mähkopfbaugruppe nach Anspruch 1, aufweisend:
- eine hohle Antriebswelle, die nicht drehbar mit dem Spulengehäuse verbunden ist; und
- wobei die selektiv betätigbare Steuerung ein verlängertes Element aufweist, das sich durch die hohle Antriebswelle erstreckt.

3. Mähkopfbaugruppe nach Anspruch 1 oder 2, ferner aufweisend eine mit der Kupplung (42) verbundene Kupplungswelle (26), die sich durch die Wandung (10) des Spulengehäuses zur Drehung relativ zum Spulengehäuse (4) erstreckt und die im Spulengehäuse (4) drehfest mit der Spule (18) kuppelbar ist.

4. Mähkopfbaugruppe nach Anspruch 2 oder 3, ferner aufweisend
- eine Feder, die in dem Spulengehäuse angeordnet und so ausgebildet ist, dass sie die Kupplung in die Kupplungsposition drückt; und
- wobei die selektiv betätigbare Steuerung eine Kupplungswelle aufweist, die sich durch die hohle Antriebswelle erstreckt und die so ausgebildet ist, dass sie die Spule relativ zu dem Spulengehäuse entkuppelt, wenn die selektiv betätigbare Steuerung betätigt wird.

5. Mähkopfbaugruppe nach Anspruch 4, wobei die Feder eine Druckfeder ist, die zwischen der Spule und der Abdeckung des Spulengehäuses angeordnet ist, und wobei die Kupplungswelle an oder nahe einem äußeren Ende mit einem Endanschlag versehen ist, der an der Druckfeder anzugreifen vermag.

6. Mähkopfbaugruppe nach einem der vorherigen Ansprüche, wobei zwischen Kupplung (42) und Spulengehäuse (4) ein Antrieb (88) zum drehbaren Antrieb zumindest des Mähkopfes (2) mit dem Spulengehäuse (4) vorgesehen ist.

7. Mähkopfbaugruppe nach den Ansprüchen 3 und 6, wobei die hohle Antriebswelle zwischen dem Antrieb (88) und dem Spulengehäuse (4) vorgesehen ist, und wobei sich die Kupplungswelle (26) in der hohlen Antriebswelle (92) erstreckt.

8. Mähkopfbaugruppe nach einem der Ansprüche 2 bis 7, wobei die hohle Antriebswelle (92) in einer Lagerbuchse (118) drehbar aufgenommen ist.

9. Mähkopfbaugruppe nach einem der vorherigen Ansprüche, wobei die Kupplung (42) aufweist:
- ein erstes Kupplungsteil, das nicht drehbar mit der Spule verbunden ist;
- ein zweites Kupplungsteil, das nicht drehbar mit dem Spulengehäuse verbunden ist;
- wobei das erste Kupplungsteil und das zweite Kupplungsteil koaxial zueinander angeordnet sind; und
- wobei das erste Kupplungsteil und das zweite Kupplungsteil jeweils einen oder mehrere Vorsprünge aufweisen, die in der Kupplungsposition miteinander in Eingriff stehen und die in der Freigabeposition zumindest zeitweise miteinander außer Eingriff stehen.

10. Mähkopfbaugruppe nach Anspruch 9, wobei zumindest das erste Kupplungsteil oder das zweite Kupplungsteil eine labyrinthartige Nut (58) aufweist, die den einen oder die mehreren Vorsprünge bildet, und wobei der eine oder die mehreren Vorsprünge des anderen Kupplungsteils durch diese labyrinthartige Nut geführt werden können.

11. Mähkopfbaugruppe nach Anspruch 9 oder 10,
- wobei die selektiv betätigbare Steuerung (76) einen Aktuator (78) umfasst, der so ausgebildet ist, dass er die Kupplung zwischen der Kupplungsposition und der Freigabeposition verstellt; und
- wobei der Aktuator (78) vorzugsweise dazu ausgebildet ist, das erste und das zweite Kupplungsteil, die beide koaxial zueinander angeordnet sind, relativ zueinander in einer axialen Richtung zu verschieben, wobei die Vorsprünge in der Freigabeposition außer Eingriff gebracht werden.

12. Mähvorrichtung zum Ummähen eines Objekts, aufweisend:
- einen Tragrahmen, der so konfiguriert ist, dass er an einem Fahrzeug angebracht werden kann; und
- einen Mährahmen, der an dem Tragrahmen angebracht ist und mindestens eine Mähkopfbaugruppe nach einem der vorherigen Ansprüche aufweist.

13. Mähvorrichtung nach Anspruch 12, wobei zwischen dem Spulengehäuse (4, 204) und der Kupplung (42) ein Aufsatz (118) angeordnet ist, mit dem die Mähkopfbaugruppe (1, 201) am Tragrahmen (126) befestigt ist.

14. Freischneider mit einer Mähkopfbaugruppenach einem der Ansprüche 1, 2 sowie 4 bis 7.

## Revendications

1. Ensemble de tête de fauchage, comprenant :
une tête de fauchage (2) comprenant un logement de bobine (4) configuré afin de recevoir à l'intérieur une bobine (18) avec un fil (20) de manière à pouvoir tourner par rapport au logement de bobine ;
un coupleur (42) configuré afin de coupler la bobine (18) et le logement de bobine (4) de manière à ne pas pouvoir tourner l'un par rapport à l'autre dans une position de couplage, et de désaccoupler la bobine (18) par rapport au logement de bobine (4) dans une position de libération ; et
dans lequel il est formé un élément de commande pouvant être activé sélectivement (76) qui est configuré de manière à entraîner le coupleur (42) à partir de la position de couplage vers la position de libération ;
**caractérisé en ce que** le coupleur (42) est agencé à l'extérieur du logement de bobine (4) de la tête de fauchage (2).

2. Ensemble de tête de fauchage selon la revendication 1, comprenant :
un arbre d'entraînement creux relié de manière à ne pas pouvoir tourner au logement de bobine ; et
dans lequel l'élément de commande pouvant être activé sélectivement comprend un élément allongé s'étendant à travers l'arbre d'entraînement creux.

3. Ensemble de tête de fauchage selon la revendication 1 ou 2, comprenant, en outre, un arbre de couplage (26) qui est relié au coupleur (42) et s'étend à travers la paroi (10) du logement de bobine de manière à pouvoir tourner par rapport au logement de bobine (4), et qui peut être couplé de manière à ne pas pouvoir tourner à la bobine (18) dans le logement de bobine (4).

4. Ensemble de tête de fauchage selon la revendication 2 ou 3, comprenant, en outre :
un ressort agencé dans le logement de bobine et configuré de manière à forcer le coupleur dans la position de couplage ; et
dans lequel l'élément de commande pouvant être activé sélectivement comporte un arbre de couplage qui s'étend à travers l'arbre d'entraînement creux et qui est configuré de manière à découpler la bobine par rapport au logement de bobine lorsque l'élément de commande pouvant être activé sélectivement est activé.

5. Ensemble de tête de fauchage selon la revendication 4, dans lequel le ressort est un ressort de compression agencé entre la bobine et le couvercle du logement de bobine, et dans lequel l'arbre de couplage comporte, au niveau d'une extrémité externe ou à proximité de celle-ci, une butée d'extrémité qui peut se coupler au ressort de compression.

6. Ensemble de tête de fauchage selon l'une quelconque des revendications précédentes, dans lequel un dispositif d'entraînement (88) destiné à assurer l'entraînement en rotation d'au moins la tête de fauchage (2) avec le logement de bobine (4) est agencé entre le coupleur (42) et le logement de bobine (4).

7. Ensemble de tête de fauchage selon les revendications 3 et 6, dans lequel l'arbre d'entraînement creux est agencé entre le dispositif d'entraînement (88) et le logement de bobine (4), et dans lequel l'arbre de couplage (26) s'étend à travers l'arbre d'entraînement creux (92).

8. Ensemble de tête de fauchage selon l'une quelconque des revendications 2 à 7, dans lequel l'arbre d'entraînement creux (92) est reçu de manière à pouvoir tourner dans un bossage de palier (118).

9. Ensemble de tête de fauchage selon l'une quelconque des revendications précédentes, dans lequel le coupleur (42) comprend :
une première partie de couplage reliée de manière à ne pas pouvoir tourner à la bobine ;
une seconde partie de couplage reliée de manière à ne pas pouvoir tourner au logement de bobine ;
dans lequel la première partie de couplage et la seconde partie de couplage sont agencées coaxialement l'une par rapport à l'autre ; et
dans lequel la première partie de couplage et la seconde partie de couplage comprennent chacune une ou plusieurs saillies qui sont couplées l'une à l'autre dans la position de couplage et qui sont au moins temporairement découplées l'une de l'autre dans la position de libération.

10. Ensemble de tête de fauchage selon la revendication 9, dans lequel au moins la première partie de couplage ou la seconde partie de couplage comprend une rainure en labyrinthe (58) formant les une ou plusieurs saillies et dans lequel les une ou plusieurs saillies de l'autre partie de couplage peuvent être guidées par cette rainure en labyrinthe.

11. Ensemble de tête de fauchage selon la revendication 9 ou 10, dans lequel l'élément de commande (76) pouvant être activé sélectivement comprend un actionneur (78) configuré de manière à déplacer le coupleur entre la position de couplage et la position de libération ; et
dans lequel l'actionneur (78) est, de préférence, configuré de manière à déplacer les première et seconde parties de couplage agencées coaxialement l'une par rapport à l'autre dans une direction axiale l'une par rapport à l'autre, dans lequel les saillies sont découplées dans la position de libération.

12. Dispositif de fauchage destiné à faucher autour d'un objet, comprenant :
une structure de support configurée de manière à pouvoir être agencée sur un véhicule ; et
une structure de fauchage disposée sur la structure de support et comprenant au moins un ensemble de tête de fauchage selon l'une quelconque des revendications précédentes.

13. Dispositif de fauchage selon la revendication 12, dans lequel un élément de fixation (118) au moyen duquel l'ensemble de tête de fauchage (1, 201) est monté sur la structure de support (126) est agencé entre le logement de bobine (4, 204) et le coupleur (42).

14. Débroussailleuse comprenant un ensemble de tête de fauchage selon l'une quelconque des revendications 1, 2, 4 à 7.
